# DEMANDE DE BREVET EUROPEEN

(11) **EP 4 403 769 A1**
(43) Date de publication de la demande: **24.07.2024**
(21) Numéro de dépôt: 23152784.7
(22) Date de dépôt: 20.01.2023
(51) Int. Cl.: F03G 6/00

(54) **DISPOSITIF ET PROCÉDÉ DE GÉNÉRATION D'ÉNERGIE ÉLECTRIQUE**

(71) Demandeur: Wise Open Foundation, 1630 Bulle (CH)
(72) Inventeur: Geinoz, François Ignace, 1630 Bulle (CH)
(74) Mandataire: Omnis-IP

(57) **Abrégé**

La présente demande concerne un dispositif de génération d'énergie électrique (10) comportant un circuit (11) de fluide caloporteur comportant au moins une zone (11a) dans laquelle le fluide caloporteur se trouve à l'état gazeux, un compresseur (12) agencé pour modifier la pression du fluide caloporteur à l'état gazeux, une turbine (14) agencée pour recevoir du fluide caloporteur à l'état gazeux, cette turbine (14) comportant un dispositif de conversion d'un flux de fluide caloporteur en énergie électrique et une sortie (14b) de fluide caloporteur, et un éjecteur (13) agencé pour recevoir du fluide caloporteur provenant d'une part de ladite turbine (14) et d'autre part dudit compresseur (12).

La demande concerne en outre un procédé de génération d'énergie électrique au moyen d'un dispositif de génération d'énergie électrique (10) tel que décrit ci-dessus, caractérisé en ce qu'il comporte les étapes consistant à injecter du fluide caloporteur à l'état gazeux à une première pression, dite haute pression, dans une première entrée (13a) dudit éjecteur (13) ; à injecter du fluide caloporteur à l'état gazeux à une deuxième pression, dite basse pression, dans une deuxième entrée (13b) dudit éjecteur (13) ; à introduire du gaz sortant dudit éjecteur (13) à une troisième pression, dite pression intermédiaire, dans un compresseur (12) de façon à produire du fluide caloporteur à l'état gazeux à ladite haute pression ; à transmettre au moins une partie du fluide caloporteur à haute pression à une turbine (14) agencé pour convertir le flux de fluide caloporteur à haute pression en énergie électrique ; et à transformer le fluide caloporteur sortant de la turbine (14) en un fluide caloporteur à l'état gazeux, à ladite basse pression.

## Description

### DOMAINE TECHNIQUE

La présente invention concerne le domaine de la production d'énergie et en particulier d'énergie électrique. Elle concerne notamment un dispositif pour la génération d'énergie électrique à partie de sources d'énergie thermiques à basse température. L'invention concerne également un procédé permettant de générer de l'énergie électrique à partir d'énergie thermique et notamment à partir de sources d'énergie thermique à basse température.

### ART ANTÉRIEUR

Actuellement, il existe plusieurs manières de générer de l'énergie électrique à partir d'énergie thermique. Une manière connue consiste à utiliser des matériaux thermoélectriques. Ceux-ci ont la capacité de convertir de l'énergie thermique en énergie électrique grâce à l'effet connu sous le nom d'effet Seebeck. Ce dernier exploite la différence de température entre deux matériaux de conductivité différente, ce qui génère un écart de potentiel et donc un courant électrique. Ces matériaux ne permettent pas de générer de grandes quantités d'énergie et ne sont donc pas utilisables dans des applications du quotidien.

Une autre manière de générer de l'énergie électrique à partir d'énergie thermique consiste à transformer l'énergie thermique en énergie mécanique, puis à convertir cette énergie mécanique en énergie électrique. Cette conversion d'énergie mécanique en énergie électrique est couramment réalisée dans des turbines comportant au moins un élément mobile et un alternateur. L'élément mobile tel que par exemple une hélice est mis en mouvement par un flux de matière et l'énergie mécanique est convertie en énergie électrique au moyen de l'alternateur.

Comme cela est bien connu, les machines thermiques qui convertissent l'énergie thermique en énergie mécanique, nécessitent une source chaude dont elles absorbent de la chaleur et une source froide dans laquelle elles rejettent la part d'énergie thermique non transformée en énergie mécanique. On estime aujourd'hui qu'environ 60% de l'énergie thermique produite est rejetée, en particulier dans l'air. Cette énergie est ainsi gaspillée.

Il existe des méthodes permettant de convertir de l'énergie thermique à haute température, typiquement de plusieurs centaines de degrés Celsius, en énergie électrique. Ces méthodes ne sont souvent pas adaptées pour récupérer de l'énergie thermique à faible température, typiquement moins de 400°C.

Il existe donc un besoin pour récupérer, par exemple sous forme d'énergie électrique, l'énergie thermique rejetée. Il est également important de trouver une solution permettant de convertir de l'énergie thermique à basse température en énergie électrique.

### DESCRIPTION DE L'INVENTION

La présente invention permet de résoudre les problèmes de l'art antérieur en proposant un dispositif et un procédé permettant de générer de l'énergie électrique à partir de sources d'énergie thermique, notamment de sources d'énergie thermique à basse température, cette énergie thermique étant généralement libérée dans l'environnement sans être utilisée.

Ce but est atteint par un dispositif de génération d'énergie électrique caractérisé en ce qu'il comporte un circuit de fluide caloporteur comportant au moins une zone dans laquelle le fluide caloporteur se trouve à l'état gazeux, un compresseur agencé pour modifier la pression du fluide caloporteur à l'état gazeux, une turbine agencée pour recevoir du fluide caloporteur à l'état gazeux, cette turbine comportant un dispositif de conversion d'un flux de fluide caloporteur en énergie électrique et une sortie de fluide caloporteur, et un éjecteur agencé pour recevoir du fluide caloporteur provenant d'une part de ladite turbine et d'autre part dudit compresseur.

Les buts de l'invention sont en outre atteints par un procédé de génération d'énergie électrique au moyen d'un dispositif de génération d'énergie électrique comportant un circuit de fluide caloporteur comportant au moins une zone dans laquelle le fluide caloporteur se trouve à l'état gazeux, un compresseur agencé pour modifier la pression du fluide caloporteur à l'état gazeux, une turbine agencée pour recevoir du fluide caloporteur à l'état gazeux, cette turbine comportant un dispositif de conversion d'un flux de fluide caloporteur en énergie électrique et une sortie de fluide caloporteur, et un éjecteur agencé pour recevoir du fluide caloporteur provenant d'une part de ladite turbine et d'autre part dudit compresseur, ce procédé étant caractérisé en ce qu'il comporte les étapes consistant à :
- injecter du fluide caloporteur à l'état gazeux à une première pression, dite haute pression, dans une première entrée dudit éjecteur ;
- injecter du fluide caloporteur à l'état gazeux à une deuxième pression, dite basse pression, dans une deuxième entrée dudit éjecteur ;
- introduire du gaz sortant dudit éjecteur à une troisième pression, dite pression intermédiaire, dans un compresseur de façon à produire du fluide caloporteur à l'état gazeux à ladite haute pression ;
- transmettre au moins une partie du fluide caloporteur à haute pression à une turbine agencé pour convertir le flux de fluide caloporteur à haute pression en énergie électrique ;
- transformer le fluide caloporteur sortant de la turbine en un fluide caloporteur à l'état gazeux, à ladite basse pression.

Le dispositif et le procédé de l'invention permettent en particulier d'utiliser des sources d'énergie thermique à basse température, des sources d'énergie fatale ou très généralement toutes sources d'énergie thermique pour produire de l'énergie électrique.

Les sources d'énergie thermique peuvent notamment être des sources qui ne sont souvent pas utilisées parce que leurs caractéristiques physiques ne correspondent pas aux besoins des installations existantes. De telles sources peuvent être par exemple des eaux de refroidissement d'installations industrielles, du liquide de retour d'un chauffage à distance, de l'énergie thermique de panneaux photovoltaïques ou d'autres types de sources d'énergie généralement considérées comme inutilisables. Il est clair qu'il est également possible d'utiliser des sources d'énergie « conventionnelles », notamment de l'énergie électrique de panneaux photovoltaïques, de l'eau chaude du liquide « aller » d'un chauffage à distance, ou de l'énergie thermique de panneaux solaires thermiques.

Par définition, l'énergie fatale est l'énergie qui serait perdue si on ne l'utilisait pas au moment où elle est disponible. Cette énergie est souvent négligée ou gaspillée du fait qu'elle est souvent produite à un moment ou en un lieu dans lequel elle n'est pas utile ou pas utilisable. La présente invention permet d'une part de capter cette énergie qui peut être difficile à capter et permet d'autre part de la convertir en énergie électrique. Cette énergie électrique présente l'avantage qu'elle peut être stockée, transportée et/ou utilisée de façon relativement simple, connue et maitrisée, en minimisant les pertes par rapport à d'autres formes d'énergie.

De cette façon, une part importante de l'énergie produite peut être utilisée, ce qui évite un gaspillage important de l'énergie. Par ailleurs, il est particulièrement intéressant d'utiliser des sources d'énergie renouvelable telle que de l'énergie thermique provenant de la biomasse ou du soleil notamment, pour transformer cette énergie en une forme plus facile à stocker et à transporter.

### BRÈVE DESCRIPTION DES DESSINS

La présente invention et ses avantages seront mieux compris en référence aux figures annexées et à la description détaillée d'un mode de réalisation particulier, dans lesquelles :
- la figure 1 est une vue schématique d'un premier mode de réalisation du dispositif de l'invention ;
- la figure 2 est une vue schématique d'un deuxième mode de réalisation du dispositif de l'invention ;
- la figure 3 est une vue schématique d'un troisième mode de réalisation du dispositif de l'invention ;
- la figure 4 est une vue schématique d'un quatrième mode de réalisation du dispositif de l'invention ;
- la figure 5 illustre une première variante du mode de réalisation de la figure 1 ;
- la figure 6 illustre une deuxième variante du mode de réalisation de la figure 1 ; et
- la figure 7 représente une variante du mode de réalisation illustré par la figure 5.

### MODE DE REALISATION DE L'INVENTION

En référence aux figures, le dispositif de génération d'énergie électrique 10 selon l'invention comporte notamment un circuit 11 de fluide caloporteur, un compresseur 12, un éjecteur 13, une turbine 14 et un dispositif de vaporisation 15.

Selon un mode de réalisation concret, le fluide caloporteur circulant dans le circuit 11 comporte du dioxyde de carbone CO₂. Ce dernier est intéressant comme fluide caloporteur pour plusieurs raisons. Aux températures dans lesquelles il est généralement utilisé, il ne passe pas à l'état solide, contrairement à l'eau en particulier. Il n'est donc pas nécessaire de prendre des précautions particulières pour l'empêcher de prendre cet état de la matière. Par ailleurs, en choisissant une combinaison de pression et de température adéquates, il est possible d'utiliser la transition de phase entre l'état gazeux et l'état liquide du dioxyde de carbone. Cette transition de phase permet une libération ou une capture d'une grande quantité d'énergie sans changement de la température. La quantité d'énergie par unité de volume ou de masse (enthalpie volumique ou enthalpie massique) est largement plus grande dans le cas où cette énergie provient d'un changement de phase entre le CO₂ liquide et le CO₂ gazeux que dans le cas où elle provient d'un changement de température de l'eau. Il en résulte que le diamètre des tubes dans lesquels circulent le fluide caloporteur peut-être nettement plus faible dans le cas où ce fluide caloporteur est du CO₂ que dans le cas où il s'agit d'eau, pour le transport d'une même quantité d'énergie. Il en résulte notamment une installation simplifiée. De plus, le CO₂ n'est pas toxique, se trouve en quantités abondantes et les coûts liés à son utilisation sont relativement faibles. D'autres fluides caloporteurs ne sont toutefois pas exclus. Il est en effet envisageable d'utiliser des fluides caloporteurs ayant des propriétés équivalentes, et en particulier des mélanges de différents fluides.

Comme cela est décrit en détail plus bas, le fluide caloporteur peut circuler dans différents états de la matière dans différentes zones du circuit. En particulier, dans une première zone 11a, le fluide caloporteur se trouve à l'état gazeux. Dans une deuxième zone 11b du circuit, le fluide caloporteur peut se trouver à l'état liquide. Le dispositif de vaporisation 15 établit une jonction matérielle entre les deux zones et permet de transformer le dioxyde de carbone liquide en dioxyde de carbone gazeux. Cet état de la matière dépend bien entendu de la pression et de la température du fluide caloporteur dans les différentes zones du circuit.

Le compresseur 12 est disposé dans le circuit de fluide caloporteur et comporte une entrée 12a et une sortie 12b. L'entrée 12a de ce compresseur reçoit du fluide caloporteur à l'état gazeux à une première pression qui est nommée ici pression intermédiaire. Cette pression peut être comprise généralement entre 50 et 80 bars. Le compresseur 12 est agencé pour augmenter la pression du fluide caloporteur gazeux. La sortie 12b est agencée pour introduire dans le circuit, du fluide caloporteur à une pression supérieure à ladite pression intermédiaire. Cette pression de sortie est dénommée ici « haute pression ». Elle est généralement comprise entre 100 et 150 bars. En principe, le compresseur 12 fonctionne avec une alimentation électrique. Cette alimentation électrique peut être une source indépendante ; elle peut être une source connectée au dispositif de génération de l'invention, telle que par exemple un panneau solaire photovoltaïque. L'énergie électrique nécessaire au fonctionnement du compresseur peut être prélevé directement de la turbine 14.

L'éjecteur 13 est également disposé dans le circuit 11 de fluide caloporteur et comporte deux entrées 13a, 13b et une sortie 13c. L'une des entrées 13b de l'éjecteur est connectée matériellement au dispositif de vaporisation 15 dont le fonctionnement est décrit en détail plus bas. Cette entrée 13b reçoit du fluide caloporteur à une pression inférieure à la « pression intermédiaire » mentionnée plus haut. Cette pression est dénommée ici « basse pression ». L'autre entrée 13a de l'éjecteur est connectée matériellement à la sortie 12b du compresseur 12. Cette entrée 13a de l'éjecteur reçoit ainsi du fluide caloporteur gazeux à haute pression. Le fluide caloporteur à haute pression crée une dépression dans l'éjecteur 13 et comprime le fluide caloporteur à basse pression pour produire du fluide caloporteur à pression intermédiaire. Ce fluide caloporteur à pression intermédiaire sort par la sortie 13c de l'éjecteur 13 dans le circuit de fluide caloporteur.

La turbine 14 comporte une entrée 14a connectée à la zone 11a du circuit dans laquelle le fluide caloporteur circule sous forme gazeuse. Plus précisément, l'entrée 14a de la turbine est agencée pour recevoir du CO₂ gazeux à haute pression. La turbine 14 comporte également une sortie 14b permettant d'évacuer le fluide caloporteur de cette turbine. Cette dernière comporte en outre une chambre reliant l'entrée 14a à la sortie 14b et contenant un élément mobile (non représenté) qui peut être mis en mouvement par un flux de fluide caloporteur circulant entre l'entrée et la sortie. L'élément mobile peut typiquement être une hélice, bien que d'autres éléments pourraient être envisagés.

La turbine comporte en outre un alternateur (non représenté) ayant pour fonction de convertir l'énergie mécanique du mouvement de l'élément mobile en énergie électrique.

La sortie 14b de la turbine est reliée matériellement au dispositif de vaporisation 15.

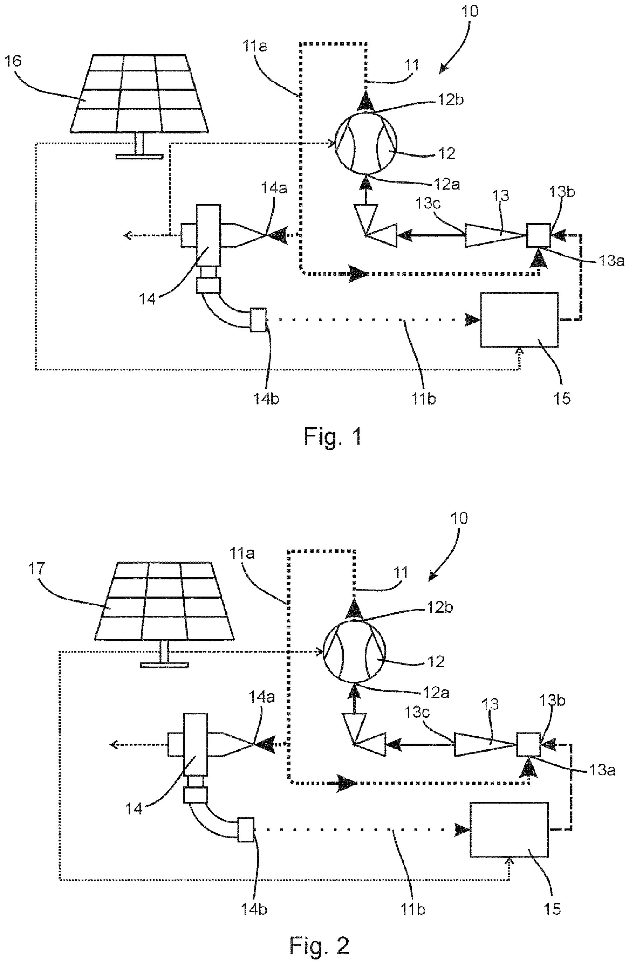

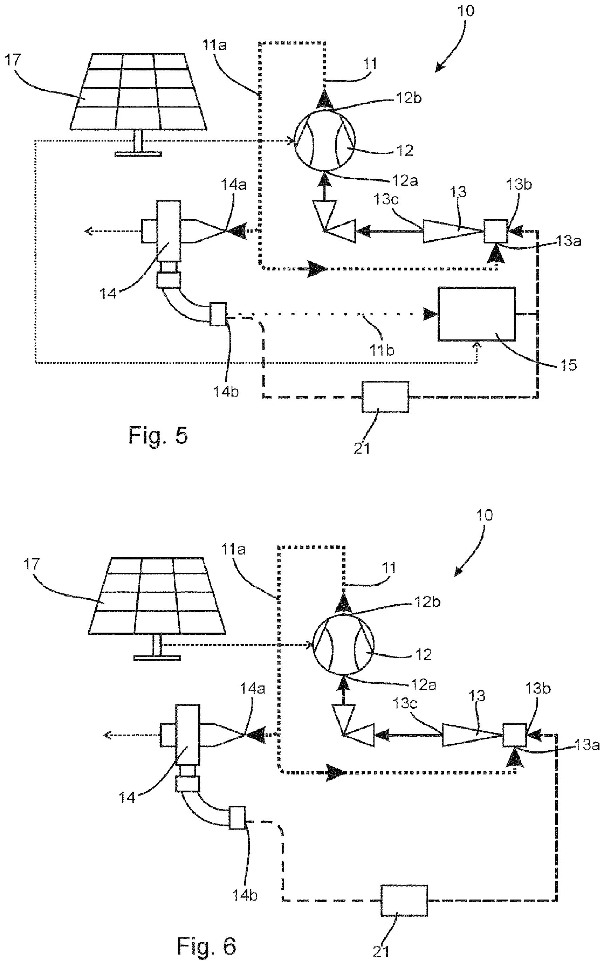

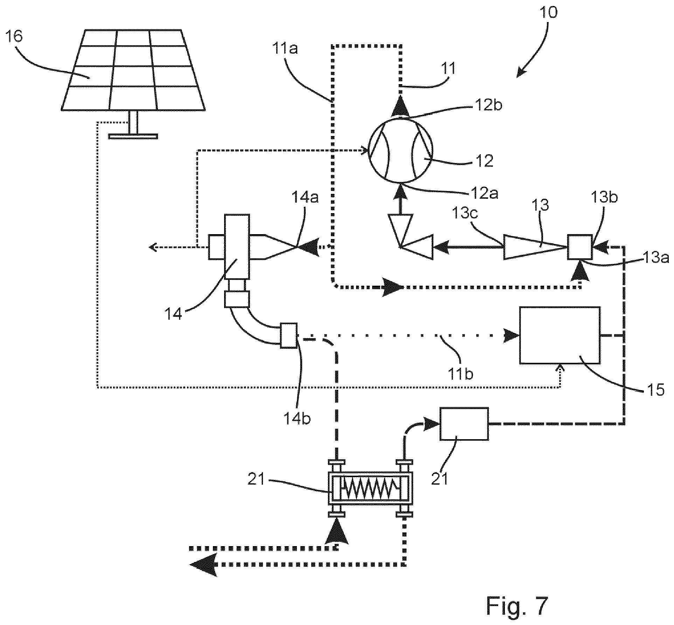

Ce dispositif de vaporisation 15 reçoit du fluide caloporteur sortant de la turbine 14. Ce fluide caloporteur se trouve à l'état liquide dans les modes de réalisation illustrés par les figures 1 à 4. Il pourrait toutefois également se trouver sous forme d'un mélange de CO₂ gazeux et de CO₂ liquide come cela est représenté par les figures 5 et 7. Le dioxyde de carbone sortant de la turbine pourrait également être totalement à l'état gazeux, comme cela est illustré par la figure 6.

La fonction du dispositif de vaporisation 15 est de rendre le dioxyde de carbone à l'état gazeux. A cet effet, le fluide caloporteur rentrant dans le dispositif de vaporisation 15 en provenance de la turbine 14 est chauffé jusqu'à atteindre cet état de la matière.

L'énergie permettant de chauffer ce fluide caloporteur peut provenir de différentes sources. A titre d'exemple, il est possible d'utiliser un ou des panneaux solaires thermiques ou de prélever de l'énergie provenant de parois de bâtiments, d'eau de refroidissement ou de toute autre source adéquate. D'autres types d'énergie, telle qu'en particulier de l'énergie électrique pourraient également être utilisés.

Le dispositif de génération d'énergie électrique 10 fonctionne sous forme d'un cycle. Dans la description ci-dessous, le cycle est décrit à partir de l'éjecteur 13. L'éjecteur reçoit d'une part du dioxyde de carbone à l'état gazeux à haute pression et d'autre part du dioxyde de carbone gazeux à basse pression. Ces gaz sont mélangés dans l'éjecteur 13. Il en ressort du dioxyde de carbone gazeux à pression intermédiaire.

Ce dioxyde de carbone est ensuite envoyé dans le compresseur 12 dans lequel il est comprimé de façon à obtenir du dioxyde de carbone à haute pression.

Une partie du dioxyde de carbone à haute pression est envoyée à l'entrée de la turbine 14 et une autre partie est renvoyée à l'entrée 13a de l'éjecteur 13. Dans cette zone du circuit, le dioxyde de carbone se trouve à l'état gazeux.

La partie du dioxyde de carbone à haute pression envoyée à l'entrée 14a de la turbine 14 est utilisée pour générer de l'énergie mécanique, en particulier par le déplacement de l'organe mobile de cette turbine. L'alternateur de la turbine convertit ensuite l'énergie mécanique en énergie électrique. Cette dernière peut être utilisée en partie pour faire fonctionner le compresseur 12. Elle peut également être transmise vers un consommateur d'énergie électrique, dans un réseau ou dans un dispositif de stockage notamment.

Le fluide caloporteur introduit dans la turbine 14 subit une détente et donc un refroidissement. Ce refroidissement peut engendrer un changement de phase dans le fluide caloporteur, qui passe de l'état gazeux à l'état liquide. Selon les conditions d'utilisation, il est possible que le fluide caloporteur se trouve à l'état de mélange gazeux et liquide ou reste à l'état gazeux.

Le fluide caloporteur sortant de la turbine 14 est envoyé au dispositif de vaporisation 15 dans lequel il est chauffé pour être converti en dioxyde de carbone gazeux, qui est lui-même utilisé comme gaz d'entrée dans l'éjecteur 13.

Le dispositif de l'invention peut être alimenté en énergie par différentes sources d'énergie. En particulier, ce dispositif permet de récupérer de l'énergie de sources qui ne sont souvent pas utilisées comme indiqué plus haut. Comme également indiqué plus haut, de telles sources peuvent être notamment des eaux de refroidissement d'installations industrielles, du liquide de retour d'un chauffage à distance, de l'énergie thermique de panneaux photovoltaïques ou d'autres types de sources d'énergie généralement considérées comme inutilisables, de même que des sources d'énergie conventionnelles comme de l'énergie électrique de panneaux photovoltaïques, de l'eau chaude du liquide « aller » d'un chauffage à distance, ou de l'énergie thermique de panneaux solaires thermiques. Par ailleurs, il est possible de combiner plusieurs sources d'énergie. Il est par exemple possible d'utiliser une source d'eau combinée avec un ou plusieurs panneaux solaires.

A titre d'exemple concret, l'une des sources d'énergie pourrait être un conduit de départ d'un dispositif de chauffage à distance et avoir une température comprise entre 70°C et 90°C. L'autre source d'énergie pourrait être un conduit de retour du dispositif de chauffage à distance et avoir une température comprise entre 25°C et 50°C.

La figure 1 illustre un mode de réalisation dans lequel le dispositif de l'invention utilise comme source d'énergie, un panneau solaire thermique 16 destiné à récupérer l'énergie solaire et à la convertir en énergie électrique. L'énergie électrique nécessaire pour faire fonctionner le compresseur 12, le cas échéant, est une partie de l'énergie électrique produite par la turbine 14. L'énergie thermique nécessaire pour faire fonctionner de dispositif de vaporisation 15 provient du panneau solaire thermique. Le dispositif de l'invention permet ainsi de convertir de l'énergie thermique récupérée par le ou les panneaux solaires thermiques en énergie électrique, de façon simple et efficace. De plus, cette installation est simple et peu coûteuse à mettre en place.

Dans le mode de réalisation illustré par la figure 2, la source d'énergie du dispositif de l'invention est un panneau solaire photovoltaïque 17. Ce panneau produit une certaine quantité d'énergie électrique qu'il est possible d'utiliser notamment pour alimenter le compresseur 12.

De façon générale, les panneaux solaires photovoltaïques génèrent également de l'énergie thermique. Cette énergie thermique est souvent inutilisée, notamment du fait de la difficulté de la transporter et/ou de la stocker. Dans le dispositif de l'invention, cette énergie thermique est utilisée dans le dispositif de vaporisation 15 pour vaporiser le fluide caloporteur liquide en fluide caloporteur gazeux, avant l'entrée de l'éjecteur 13.

Le transfert de cette énergie thermique dans le dispositif de vaporisation 15 peut se faire notamment au moyen d'un échangeur de chaleur (non représenté) qui permet de transférer de l'énergie sans transfert de matière.

Dans ce mode de réalisation, l'énergie produite par le panneau solaire photovoltaïque est utilisée de façon optimale, que cette énergie soit électrique ou thermique. Elle améliore donc de façon importante le rendement d'une installation photovoltaïque.

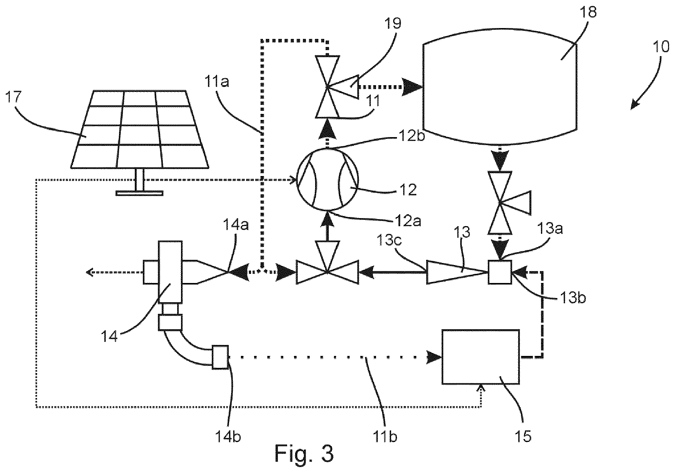

Dans le mode de réalisation illustré par la figure 3, le circuit 11 de fluide caloporteur gazeux comporte un élément de stockage 18 de dioxyde de carbone gazeux à haute pression. Plus précisément, la sortie 12b du compresseur 12 est connectée matériellement à une vanne 19 par exemple une vanne trois voies, dont l'une des voies est connectée matériellement à l'élément de stockage 18. Par cette vanne trois voies, il est possible de choisir d'envoyer le dioxyde de carbone gazeux à haute pression dans la turbine 14 ou dans l'élément de stockage 18.

Cet élément de stockage 18 est relié matériellement à l'éjecteur 13, de sorte que le dioxyde de carbone à haute pression entrant dans l'éjecteur 13 est prélevé de l'élément de stockage 18 et pas ou pas nécessairement de la sortie 12b du compresseur. Cet élément de stockage facilite la gestion des flux de dioxyde de carbone dans l'ensemble du circuit.

Dans cette figure 3, la sortie 12b du compresseur est également connectée matériellement à l'entrée 12a de ce compresseur au moyen d'une vanne. De ce fait, une partie du fluide caloporteur gazeux à haute pression qui n'est pas utilisée dans la turbine 14 peut être réinjectée dans le compresseur 12. Ceci permet également de faciliter et d'optimiser les flux de dioxyde de carbone dans l'ensemble du circuit et d'adapter ces flux de façon dynamique, en fonction des besoins et des ressources disponibles.

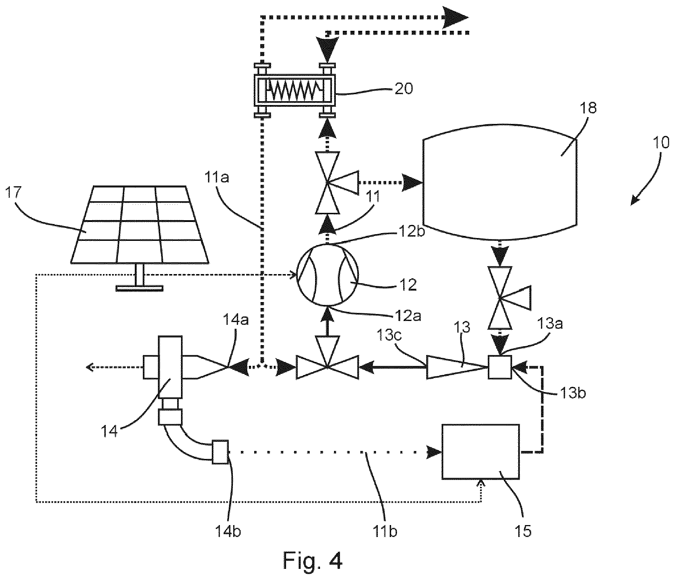

Dans le mode de réalisation illustré par la figure 4, la zone 11a du circuit dans laquelle circule le fluide caloporteur à l'état gazeux comporte un échangeur de chaleur 20, nommé ici échangeur de chaleur de réchauffement. Plus précisément, en sortie du compresseur 12, le fluide caloporteur gazeux à haute pression est introduit dans l'échangeur de chaleur 20 de réchauffement dans lequel il cède une partie de son énergie à un consommateur. Ce consommateur peut typiquement être un système de chauffage domestique, un élément de production d'eau chaude sanitaire, ou d'autres systèmes similaires.

Dans un mode de réalisation concret, l'échangeur de chaleur 20 de réchauffement reçoit de l'eau froide en entrée d'un côté de l'échangeur de chaleur. Cette eau froide est réchauffée par le fluide caloporteur gazeux à haute pression circulant de l'autre côté de l'échangeur de chaleur de sorte que de l'eau chaude sort de cet échangeur de chaleur.

De l'autre côté de l'échangeur de chaleur, c'est-à-dire du côté dans lequel circule du dioxyde de carbone gazeux, du dioxyde de carbone entre à une température élevée et ressort, après avoir cédé une partie de son énergie thermique, à une température plus basse.

L'une des sorties de l'échangeur de chaleur 20 de réchauffement est connectée à l'entrée 14a de la turbine 14 et à l'entrée 12a du compresseur 12, comme dans le mode de réalisation illustré par la figure 3.

Cette réalisation permet de générer de l'énergie électrique, de façon similaire aux modes de réalisation illustré par les figures précédentes. Elle permet en outre de transférer de l'énergie thermique à un consommateur.

Le mode de réalisation illustré par la figure 5 est en partie similaire au mode de réalisation illustré par la figure 1. Toutefois, dans la figure 5, la sortie 14b de la turbine 14 comporte non seulement du dioxyde de carbone liquide, mais également du dioxyde de carbone gazeux à faible pression. Le dioxyde de carbone liquide et le dioxyde de carbone gazeux sont séparés l'un de l'autre. Le dioxyde de carbone liquide est envoyé au dispositif de vaporisation 15 comme dans les modes de réalisation décrits plus haut. Le dioxyde de carbone gazeux à faible pression est introduit dans un dispositif de compression 21 qui a pour fonction d'augmenter la pression de ce dioxyde de carbone. La pression finale en sortie de ce dispositif de compression 21 peut être du même ordre de grandeur que la pression obtenue en sortie du dispositif de vaporisation 15. Ce dioxyde de carbone gazeux peut alors être mélangé au dioxyde de carbone sortant du dispositif de vaporisation 15 et/ou être introduit dans l'éjecteur 13.

Cette variante permet ainsi de gérer de façon avantageuse, les cas dans lesquels la turbine 14 fournit du dioxyde de carbone liquide et du dioxyde de carbone gazeux.

Il est à noter que cette variante a été décrite dans le mode de réalisation illustré par la figure 1. Elle peut toutefois également être ajoutée aux autres modes de réalisation, en particulier ceux décrits en référence aux figures 2 à 4.

La figure 6 illustre un mode de réalisation dans lequel le fluide caloporteur sortant de la turbine 14 se trouve exclusivement à l'état gazeux et non à l'état liquide. Dans ce mode de réalisation, le fluide caloporteur sortant de cette turbine est envoyé au dispositif de compression 21 agencé pour comprimer le fluide caloporteur gazeux à faible pression sortant de la turbine de façon à ce que ce fluide caloporteur atteigne une pression compatible avec son utilisation dans l'éjecteur. Cette pression peut être typiquement inférieure à 40 bars. Elle peut être du même ordre de grandeur que la pression du fluide caloporteur à l'état gazeux sortant du dispositif de vaporisation 15 tel que décrit dans les modes de réalisation précédents.

Dans le mode de réalisation illustré par la figure 7, la turbine 14 délivre du dioxyde de carbone à l'état liquide et à l'état gazeux. La portion liquide de ce dioxyde de carbone est transmise au dispositif de vaporisation 15 comme dans les modes de réalisation précédents. La portion gazeuse de ce dioxyde de carbone est transmise à une première entrée d'un échangeur de chaleur, dit échangeur de chaleur de refroidissement 22. Cet échangeur de chaleur de refroidissement comporte une première sortie communiquant avec la première entrée, cette première sortie étant connectée matériellement au dispositif de compression 21.

L'échangeur de chaleur de refroidissement 22 comporte une deuxième entrée et une deuxième sortie reliées matériellement entre elles. De façon classique, le circuit hydraulique reliant la première entrée à la première sortie est connecté thermiquement au circuit hydraulique reliant la deuxième entrée à la deuxième sortie, ces deux circuits étant toutefois séparés matériellement, de sorte qu'ils peuvent échanger de la chaleur, sans échanger de matière.

Un fluide caloporteur, dit fluide caloporteur chaud, tel que de l'eau, du dioxyde de carbone, de l'air ou un autre fluide caloporteur adéquat est introduit dans l'échangeur de chaleur de refroidissement 22 par sa deuxième entrée, à une température plus élevée que la température du dioxyde de carbone gazeux provenant de la turbine 14. Ce fluide caloporteur chaud cède une partie de son énergie au dioxyde de carbone et ressort donc de l'échangeur de chaleur de refroidissement 22 à une température inférieure à la température d'entrée.

Ce mode de réalisation permet ainsi de générer de l'énergie électrique de façon similaire aux modes de réalisation illustré par les figures précédentes, tout en permettant en outre de fournir du froid à un consommateur.

Il est à noter qu'en pratique, le fluide caloporteur sortant de la turbine peut se trouver à l'état liquide exclusivement, à l'état gazeux exclusivement ou sous forme de mélange de fluide caloporteur liquide et gazeux. Il est possible de choisir l'état dans lequel le fluide caloporteur sort de la turbine 14 en choisissant les conditions de fonctionnement du système, en particulier les différentes pressions et températures du fluide caloporteur dans les différentes zones du circuit.

La turbine peut également être adaptée ou choisie pour fonctionner avec un fluide caloporteur à l'état gazeux uniquement, à l'état liquide uniquement ou aussi bien à l'état liquide que gazeux.

De façon générale, certains modes de réalisation décrits comportent des panneaux solaires thermiques alors que d'autres comportent des panneaux solaires photovoltaïques. Certains modes de réalisation comportent des éléments de stockage, des circuits de récupération de dioxyde de carbone gazeux à basse pression et/ou un ou plusieurs échangeurs de chaleur. Ces éléments peuvent être interchangés ou combinés entre eux, pour autant que ces combinaisons aient un sens du point de vue technique.

Le dispositif de l'invention a été décrit avec du dioxyde de carbone comme fluide caloporteur. Notamment pour les raisons indiquées plus haut, ce dernier est intéressant de par ses propriétés. D'autres fluides caloporteurs ne sont toutefois pas exclus. Il est en effet envisageable d'utiliser des fluides caloporteurs ayant des propriétés équivalentes, et en particulier des mélanges de différents fluides.

## Revendications

1. Dispositif de génération d'énergie électrique (10) **caractérisé en ce qu'**il comporte un circuit (11) de fluide caloporteur comportant au moins une zone (11a) dans laquelle le fluide caloporteur se trouve à l'état gazeux, un compresseur (12) agencé pour modifier la pression du fluide caloporteur à l'état gazeux, une turbine (14) agencée pour recevoir du fluide caloporteur à l'état gazeux, cette turbine (14) comportant un dispositif de conversion d'un flux de fluide caloporteur en énergie électrique et une sortie (14b) de fluide caloporteur, et un éjecteur (13) agencé pour recevoir du fluide caloporteur provenant d'une part de ladite turbine (14) et d'autre part dudit compresseur (12).

2. Dispositif de génération d'énergie électrique selon la revendication 1, **caractérisé en ce que** le dioxyde de carbone sortant de la turbine (14) est au moins en partie à l'état liquide et **en ce que** ce dispositif de génération d'énergie électrique (10) comporte un dispositif de vaporisation (15) agencé pour vaporiser le dioxyde de carbone sortant de la turbine (14) à l'état liquide.

3. Dispositif de génération d'énergie électrique selon la revendication 1 ou 2, **caractérisé en ce que** le dioxyde de carbone sortant de la turbine (14) est au moins en partie à l'état gazeux et **en ce que** ce dispositif de génération d'énergie électrique (10) comporte un dispositif de compression (21) agencé pour modifier la pression du gaz sortant de la turbine (14).

4. Dispositif de génération d'énergie électrique selon la revendication 1, **caractérisé en ce que** le circuit (11) de fluide caloporteur est connecté matériellement à un élément de stockage (18) agencé pour stocker du dioxyde de carbone.

5. Dispositif de génération d'énergie électrique selon la revendication 4, **caractérisé en ce que** l'élément de stockage (18) est connecté matériellement à la sortie (12b) du compresseur (12).

6. Dispositif de génération d'énergie électrique selon la revendication 4 ou 5, **caractérisé en ce que** l'élément de stockage (18) est connecté matériellement à une entrée (13a) de l'éjecteur (13).

7. Dispositif de génération d'énergie électrique selon l'une quelconque des revendications précédentes, **caractérisé en ce que** le circuit (11) de fluide caloporteur comporte un échangeur de chaleur (20, 22) agencé pour échanger de l'énergie thermique avec un consommateur.

8. Dispositif de génération d'énergie électrique selon l'une quelconque des revendications précédentes, **caractérisé en ce qu'**il est alimenté par une source d'énergie thermique.

9. Procédé de génération d'énergie électrique au moyen d'un dispositif de génération d'énergie électrique (10) comportant un circuit (11) de fluide caloporteur comportant au moins une zone dans laquelle le fluide caloporteur se trouve à l'état gazeux, un compresseur (12) agencé pour modifier la pression du fluide caloporteur à l'état gazeux, une turbine (14) agencée pour recevoir du fluide caloporteur à l'état gazeux, cette turbine (14) comportant un dispositif de conversion d'un flux de fluide caloporteur en énergie électrique et une sortie (14b) de fluide caloporteur, et un éjecteur (13) agencé pour recevoir du fluide caloporteur provenant d'une part de ladite turbine (14) et d'autre part dudit compresseur (12), ce procédé étant **caractérisé en ce qu'**il comporte les étapes consistant à :
• injecter du fluide caloporteur à l'état gazeux à une première pression, dite haute pression, dans une première entrée (13a) dudit éjecteur (13) ;
• injecter du fluide caloporteur à l'état gazeux à une deuxième pression, dite basse pression, dans une deuxième entrée (13b) dudit éjecteur (13) ;
• introduire du gaz sortant dudit éjecteur (13) à une troisième pression, dite pression intermédiaire, dans un compresseur (12) de façon à produire du fluide caloporteur à l'état gazeux à ladite haute pression ;
• transmettre au moins une partie du fluide caloporteur à haute pression à une turbine (14) agencé pour convertir le flux de fluide caloporteur à haute pression en énergie électrique ;
• transformer le fluide caloporteur sortant de la turbine (14) en un fluide caloporteur à l'état gazeux, à ladite basse pression.

10. Procédé de génération d'énergie électrique selon la revendication 9, **caractérisé en ce que** l'on stocke du fluide caloporteur provenant de la sortie du compresseur (12).

11. Procédé de génération d'énergie électrique selon la revendication 9, **caractérisé en ce que** l'on vaporise du fluide caloporteur sortant de la turbine (14) à l'état liquide.

12. Procédé de génération d'énergie électrique selon la revendication 9, **caractérisé en ce que** l'on comprime du fluide caloporteur sortant de la turbine (14) à l'état gazeux.
